# EUROPEAN PATENT APPLICATION

(11) **EP 3 407 251 A1**
(43) Date of publication of application: **28.11.2018**
(21) Application number: 18169675.8
(22) Date of filing: 26.04.2018
(51) Int. Cl.: G06K 9/00, G06K 9/32, G06K 9/62

(54) **METHOD OF CLASSIFYING OBJECTS FOR A PERCEPTION SCENE GRAPH AND SYSTEM FOR USING A SCENE DETECTION SCHEMA FOR CLASSIFYING OBJECTS IN A PERCEPTION SCENE GRAPH (PSG) IN A MOTOR VEHICLE**

(30) Priority: 26.05.2017 US 201715607070
(71) Applicant: Dura Operating, LLC, Auburn Hills, MI 48326 (US)
(72) Inventor: HOVIS, Jeffrey Gene, Almont, MI Michigan 48003 (US); SZCZERBA, Michael Bernhard, Troy, MI Michigan 48084 (US)
(74) Representative: Bungartz Christophersen Partnerschaft mbB Patentanwälte

(57) **Abstract**

A method and system is provided for using a scene detection schema for classifying objects in a perception scene graph for a motor vehicle. The scene detection schema includes collecting sensor information about an area surrounding the vehicle, including capturing an image of the area; processing the sensor information to generate a perception scene graph (PSG); detecting a plurality of objects by analyzing the captured image; comparing the detected objects with reference objects; classifying the detected objects based on matching reference objects; and assigning a priority to each of the classified objects. The steps of detecting and classifying objects having higher priorities are reiterated with a greater frequency than objects having lower priorities. An object is assigned a higher priority level if the object is in a focus region of the PSG. The fidelity of the focus region is increased by updating the classification of the objects after each reiteration.

## Description

The invention relates generally to perception systems for a motor vehicle; more particularly, to a method and system of classifying objects in a perception scene graph generated by a perception system.

The statements in this section merely provide background information related to the present disclosure and may or may not constitute prior art.

Advanced Driver Assistance Systems (ADAS) are used in motor vehicles to enhance or automate selective motor vehicle systems in order to increase occupant safety and operator driving performance. ADAS include vehicle controllers that are in communication with external sensors, vehicle state sensors, and selective motor vehicle systems, such as occupant safety systems and vehicle control systems. The vehicle controllers analyze information gathered by the external sensors and vehicle state sensors to provide instructions to the vehicle control systems to assist the vehicle in avoiding and navigating around obstacles as the vehicle travels down a road.

Typical vehicle controllers include processors and non-transitive memories. The non-transitive memories contained predefined routines executable by the processors and databases accessible by the processors. The processors analyze the information supplied by the external sensors to detect and isolate objects from the background scene. The processors classify the objects by comparing the objects to reference objects stored in the databases. Once the objects are isolated and identified, the distance and direction of the objects relative to the motor vehicle are determined. The vehicle controllers then communicate instructions to the motor vehicle systems, including steering, throttle, and braking control systems, to negotiate a path to avoid contact with the objects or activate safety systems if contact with an object is imminent.

Thus, while current ADAS having vehicle controllers adequate to process information from external sensors to achieve their intended purpose, there is a need for a new and improved system and method for a perception system that is capable of obtaining higher fidelity for selected objects and areas of interest while conserving processing power for the overall perception system.

According to several aspects, a method of classifying objects for a perception scene graph is disclosed. The method includes the steps of collecting sensor information about an area adjacent a motor vehicle; processing the sensor information to detect a plurality of objects and to generate a perception scene graph (PSG) comprising a virtual 3-dimensional model of the area adjacent the motor vehicle; comparing each of the detected plurality of objects; and classifying each of the detected plurality of objects.

In an additional aspect of the present disclosure, the PSG includes the detected plurality of objects; the step of comparing each of the detected plurality of objects with reference objects is in a scene detection schema (SDS) tree having a plurality of classification levels; and the step of classifying each of the detected plurality of objects is in the PSG based on the classification level in the SDS tree. Further the method comprises the step of assigning a classification level (n) to each of the detected plurality of objects.

In an additional aspect of the present disclosure, the step of collecting sensor information about an area adjacent a motor vehicle, includes capturing an image by an image capturing device. The step of processing the sensor information to detect a plurality of objects includes analyzing the captured image to detect the plurality of objects. The step of comparing each of the detected plurality of objects with reference objects includes comparing the captured image with reference images of the objects.

In another aspect of the present disclosure, the method further includes the step of assigning a priority level to each of the detected plurality of objects based on a predetermined importance of each of the plurality of object.

In another aspect of the present disclosure, the method further includes the step of increasing the fidelity of the PSG by classifying each of the detected objects based on the respective assigned priority levels and classification levels (n) for each object.

In another aspect of the present disclosure, the method further includes the steps of determining the number of instances (n) each of the plurality of objects have been previously classified; assigning a classification level of n+1 for each of the plurality of objects based on the number instances (n) each of the plurality of objects have been previously classified; and comparing each of the plurality of objects with reference objects within the respective n+1 classification level of each object in the SDS tree.

In another aspect of the present disclosure, the priority level of an object classified as an animate object is higher than the priority level of an object classified as an inanimate object. The priority level of an animate object of a pedestrian is higher than an animate object of a motor vehicle.

In another aspect of the present disclosure, the method further includes the steps of identifying a focus region in the virtual 3-D model of the area adjacent the motor vehicle and assigning a higher priority level to a plurality of objects detected in the focus region as compared to objects detected outside the focus region.

According to several aspects, a method of a scene detection schema for classifying objects is provided. The method includes the steps of collecting sensor information about an area adjacent a motor vehicle, including capturing an image, by an image capturing device; processing the sensor information to generate a perception scene graph (PSG) comprising a virtual 3-dimensional model of the area adjacent the motor vehicle; detecting a plurality of objects in the virtual 3-dimensional model by analyzing the collected sensor information, including analyzing the captured image to detect the plurality of objects; comparing each of the detected plurality of objects with reference objects; classifying each of the detected plurality of objects based on matching reference objects; assigning a priority level to each of the classified objects; and reclassifying selected objects using a SDS tree based on the respective assigned priority levels for each object.

In an additional aspect of the present disclosure, the SDS tree includes a plurality of classification levels. The method further includes the steps of assigning a higher classification level (n) for objects having a higher priority level than an object with a lower priority level.

In another aspect of the present disclosure, the method further includes the steps of increasing the fidelity of the PSG by reclassifying the objects by repeated iterations through the SDS tree.

In another aspect of the present disclosure, the method further includes the steps of assigning an object with a higher priority level if the object is in the path of the vehicle than an object that is not within the path of the vehicle.

In another aspect of the present disclosure, the method further includes the steps of assigning an object with a higher priority level if the object is in a defined focus region than an object that is not within a defined focus region.

In another aspect of the present disclosure, objects having a higher priority level correspond with a higher classification level, and the higher classification level includes greater details of the object.

According to several aspects, a system for using a scene detection schema for classifying objects in a perception scene graph (PSG) in a motor vehicle is disclosed. The system includes at least one external sensor, including an image capturing device, having an effective sensor range configured to gather information on a surrounding of the motor vehicle; and at least one perception controller in communication with the at least one external sensor, wherein the at least one perception controller is configured to generate the PSG comprising a virtual model of the surroundings of the motor vehicle based on the gathered information from the external sensor. The at least one perception controller is further configured to detect objects based on gathered information, compare detected objects with reference objects, and classify detected object based on matching reference objects in a scene detection schema (SDS) tree having a plurality of classification levels.

In an additional aspect of the present disclosure, the at least one perception controller is further configured to increase the fidelity of the virtual model by assigning a priority level to each of the detected objects based on a predetermined importance of each object.

In another aspect of the present disclosure the at least one perception controller is further configured to reclassify higher priority objects with a greater frequency than lower priority objects.

In another aspect of the present disclosure, the at least one perception controller is further configured to determine the number of instances (n) each of the objects have been previously classified from information extracted from the PSG.

In another aspect of the present disclosure, the at least one perception controller is further configured to assign a level of classification of n+1 for each of the plurality of objects based on the number instances (n) each of the plurality of objects have been previously classified.

In another aspect of the present disclosure, the at least one perception controller is further configured to compare each of the plurality of objects with a respective n+1 level reference objects for classification of each of the plurality of objects.

Other benefits and further areas of applicability will become apparent from the description provided herein. It should be understood that the description and specific examples are intended for purposes of illustration only and are not intended to limit the scope of the present disclosure.

The drawings described herein are for illustration purposes only and are not intended to limit the scope of the present disclosure in any way.
- FIG. 1: is a functional diagram of a process for generating and using a perception scene graph (PSG) in a motor vehicle, according to an exemplary embodiment;
- FIG. 2: is a functional diagram of a perception system and a vehicle state decision logic (SDL) controller, according to an exemplary embodiment;
- FIG. 3: is a vehicle having the perception system and the vehicle SDL controller of FIG. 2, according to an exemplary embodiment;
- FIG. 4: is a rendering of the information contained in the PSG published by the perception system of FIG. 2, according to an exemplary embodiment;
- FIG. 5: is a flow diagram showing a method of generating a PSG having at least one focus region;
- FIG. 6: is a flow diagram detailing a step in the flow diagram of FIG. 5; and
- FIG. 7: shows an exemplary scene detection schema tree.

The following description is merely exemplary in nature and is not intended to limit the present disclosure, application, or uses.

A perception scene graph (PSG) is a data structure that contains processed information representing a virtual 3-Dimensonal (3-D) model of a volume of space and/or area surrounding the motor vehicle, including any objects within that volume of space and/or area. A PSG can be viewed as a visually-grounded graphical structure of the real-world surrounding the motor vehicle. In the PSG, objects are isolated from the background scene, characterized, and located with respect to the motor vehicle. The movements of the objects may be tracked and recorded. The movements of the objects may also be predicted based on historic locations and trends in the movements.

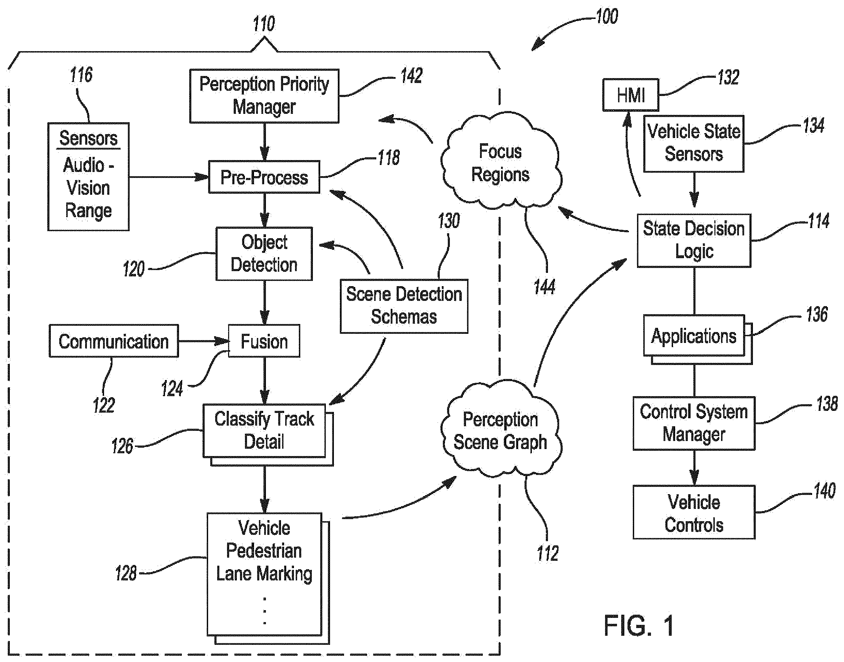

FIG. 1 shows a functional diagram 100 of a perception process 110 for generating a perception scene graph (PSG) 112 and the use of the PSG 112 by a motor vehicle having state decision logic (SDL) 114. The perception process 110 publishes the PSG 112 and the vehicle SDL 114 subscribes to and extracts the processed information from the PSG 112. The vehicle SDL 114 uses the extracted information as input for the execution of a variety of vehicle software applications.

The perception process 110 starts in block 116 where the external sensors of the motor vehicle gather information about a volume of space surrounding the motor vehicle, including the adjacent surrounding areas. The gathered raw information is pre-processed in block 118 and objects are isolated and detected in block 120 from the background scene. The distance and direction of each object relative to the motor vehicle are also determined. The information gathered about a volume of space, including the adjacent areas, surrounding the motor vehicle is limited by the audio-visual ranges of the external sensors.

In block 122, incoming communications containing information on additional objects within and/or beyond the audio-visual range of the external sensors are communicated to the motor vehicle via vehicle-to-everything (V2X) communication to supplement the objects detected in block 120. V2X communication is the passing of information from a vehicle to any communication device and vice versa, including, but not limited to, vehicle-to-vehicle (V2V), vehicle-to-infrastructure (V2I), vehicle-to-pedestrian (V2P), vehicle-to-device (V2D), and vehicle-to-grid (V2G) communications. In block 124, the information gathered by the external sensors from block 116 and information communicated to the motor vehicle from block 122 are fused to increase the confidence factors of the objects detected together with the range and direction of the objects relative to the motor vehicle.

In blocks 126 and 128, once the various information are fused, the detected objects are compared with reference objects in a database to identify the classification of the objects. The types of classification include, but are not limited to, types of lane markings, traffic signs, infrastructure, vehicles, pedestrians, animals, and any other animate or inanimate objects that may be found in a typical roadway. Once the objects are classified, the movements of the objects are tracked and predicted based on historic locations and trends in movement of the objects.

The perception process 110 is partially controlled by a scene detection schema (SDS) at block 130. The SDS describes what objects in block 120 and classifications in block 126 to search for at a particular point in time. In block 142, a perception priority manager has the responsibility to control and manage which tasks to perform in the perception pre-processing of block 118. For example, the perception priority manager may allocate greater processing power to the sensors directed rearward of the vehicle as the vehicle is moving rearward into a parking space.

The PSG 112 is generated containing information on a set of localized objects, categories of each object, and relationship between each object and the motor vehicle. The PSG 112 is continuously updated by the information gathered by the external sensors in block 116 and communications received by V2X communications in block 122 to reflect the real time change of the adjacent and non-adjacent volume of space and areas surrounding the motor vehicle. The historical events of the PSG 112 may be recorded in the perception controller's memory to be retrieve at a later time.

In block 114, the vehicle SDL, which may be part of the motor vehicle ADAS, subscribes to the PSG 112 to extract information pertaining to the external surrounding volume of space and areas of the motor vehicle. The vehicle SDL 114 can process the information contained in the PSG 112 to render and display on a human machine interface (HMI) 132, such as a display monitor on the dash of the motor vehicle, a virtual three-dimensional landscape representing the real-world environment surrounding the motor vehicle.

The vehicle SDL 114 can also analyze the information extracted from the PSG 112 to manage the current state of the vehicle control system managers 138 and to control the transitions of the control system managers 138 to new states. The vehicle SDL 114 receives information from the vehicle state sensors of block 134 to determine the state of the motor vehicle such as location, velocity, acceleration, yaw, pitch, etc. With information from the PSG 112 and vehicle state sensor information from block 134, the vehicle SDL 114 can execute routines contained in software applications in block 136 to send instructions to the motor vehicle control system manager 138 to operate the vehicle controls 140.

As the vehicle SDL 114 executes routines contained in software applications 136, the software applications 136 may require greater fidelity or information relating to regions of interest, or focus regions 144. This would be similar to the action taken by a vehicle driver of turning their head to see if a vehicle is present before they perform a lane change. A focus region 144 defines an area or volume of space that is important to the software applications of block 136 during a particular time span. The required focus region 144 is communicated to the perception priority manger in block 142, which in turn the priority manager allocates greater processing power to the sensors directed to the required focus region 144 and allocates greater processing power to the sensors directed.

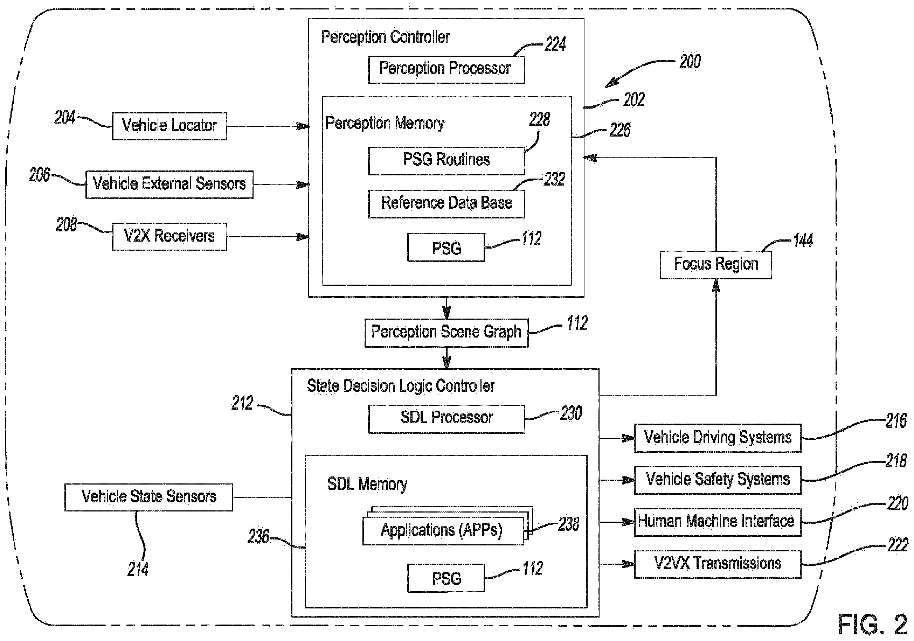

FIG. 2 shows a functional diagram of a perception system 200 having a perception controller 202 configured to receive information from a vehicle locator 204, a plurality of external sensors 206, and V2X receivers 208. FIG. 2 also shows a functional diagram of a SDL controller 212 configured to receive vehicle state information from a plurality of vehicle state sensors 214. The SDL controller 212 is configured to be in communication with the vehicle driving systems 216, vehicle safety systems 218, vehicle HMI 220, and vehicle V2X transmitters 222.

The perception controller 202 includes a perception processor 224 and a perception memory 226. The perception processor 224 processes the information gathered from the vehicle locator 204, external sensors 206, and V2X receivers, and executes PSG routines 228 stored in the perception memory 226 to generate the PSG 112 in real time as the motor vehicle is stationary or traveling along a roadway. A real time copy of the PSG 112 is published in the perception memory 226 for availability to various systems that require information pertaining to the surroundings of the vehicle. The perception memory 226 also includes a reference database 232 containing reference objects that are used to compare with the detected objects for classifying the detected objects. The reference database 232 includes the geometry and classifications of each of the reference objects.

The external sensors 206 are sensors that can detect physical objects and scenes surrounding the motor vehicle. The external sensors 206 include, but are not limited to, radar, laser, scanning laser, camera, sonar, ultra-sonic devices, LIDAR, and the like. The external sensors 206 may be mounted on the exterior of the vehicle such as a rotating laser scanner mounted on the roof of the vehicle or mounted within the interior of the vehicle such as a front camera mounted behind the windshield. Certain of these external sensors 206 are configured to measure the distance and direction of the detected objects relative to the location and orientation of the motor vehicle. Raw information acquired by these external sensors 206 are processes by the perception controller 202 to determine the classification, size, density, and/or color of the detected objects. The external sensors 206 are configured to continuously update their outputs to the perception controller 202 to reflect the real-time changes in the volume of space and areas surrounding the motor vehicle as information is being collected.

The vehicle SDL controller 212 includes a SDL processor 234 and a SDL memory 236. The SDL controller 212 receives information from the vehicle state sensors 214 and is in communication with various vehicle systems and components such as the driving system 216, safety system 218, HMI 220, and V2X transmitters 222. The SDL processor 230 processes information gathered by the vehicle state sensors 214 and subscribes to the PSG 112 to execute software applications stored in the SDL memory 236 to issue instructions to one or more of the vehicle systems 216, 218, 220, 222. The routines include various vehicle software applications 238, also known as vehicle APPS 238, including routines for the operations of the vehicle driving and safety systems 216, 218. For example, the vehicle SDL controller 212 may be in communication with the vehicle driving system 216 that controls the vehicle's deceleration, acceleration, steering, signaling, navigation, and positioning. The SDL memory 236 may also include software applications to render the information stored in the PSG 112 to be displayed on a HMI device 220 such as a display monitor on the dash of the vehicle. The SDL memory 236 may also include software applications 238 that require greater fidelity information in area or volume of space, also known as a focus region 144 that is important to the software applications 238 during a particular time span. The required focus region 144 is communicated to the perception controller 202 by the SDL controller 212. The perception controller 202 allocates greater processing power to process information collected by the external sensors 206 directed to the required focus region 144.

The perception and SDL processors 224, 230 may be any conventional processor, such as commercially available CPUs, a dedicated ASIC, or other hardware-based processor. The perception and SDL memories 226, 236 may be any computing device readable medium such as hard-drives, solid state memory, ROM, RAM, DVD or any other medium that is capable of storing information that is accessible to the perception processor. Although only one perception controller 202 and only one SDL controller 212 are shown, it is understood that the vehicle may contain multiple perception controllers 202 and multiple SDL controllers 212.

Each of the perception and SDL controllers 202, 212 may include more than one processor and memory, and the plurality of processors and memories do not necessary have to be housed within the respective controllers 202, 212. Accordingly, references to a perception controller 202, perception processor, and perception memories 226 include references to a collection of such perception controllers 202, perception processors, and perception memories that may or may not operate in parallel. Similarly, references to a SDL controller 212, SDL processor 230, and SDL memories 236 include references to a collection of SDL controllers 212, SDL processors 230, and SDL memories 236 that may or may not operate in parallel.

The information contained in the PSG 112 is normalized to the motor vehicle to abstract out the vehicle locator 204, external sensors 206, and V2X receivers 208 as the sources of the information. In other words, the SDL controller 212 is isolated from the raw information that the perception controller 202 receives from the vehicle locator 204, external sensors 206, and V2X receivers 208. With respect to the external surroundings of the motor vehicle, the SDL controller 212 extracts the processed information stored in the PSG 112 as input to execute software applications 238 for the operation of the motor vehicle. The SDL controller 212 does not see the real-world surroundings of the motor vehicle, but only see the virtual 3D model of the real-word surrounding generated by the perception controller 202. A primary benefit to this is that the external sensors 206 and types of external sensors 206 may be substituted without the need to replace the SDL processors 230 and/or upgrade the software applications contained in the SDL memories 236 to accommodate for the different external sensor types. A real-time copy of the PSG 112 may be published to the SDL controller 212 and to various other system controllers and/or computing devices throughout the motor vehicle. This ensures that if one or more of the perception controllers 202 and/or SDL controller 212 should fail, the various other system controllers and/or computing devices will be able to operate temporary in a "limp-home" mode to navigate the motor vehicle into a safe zone or area.

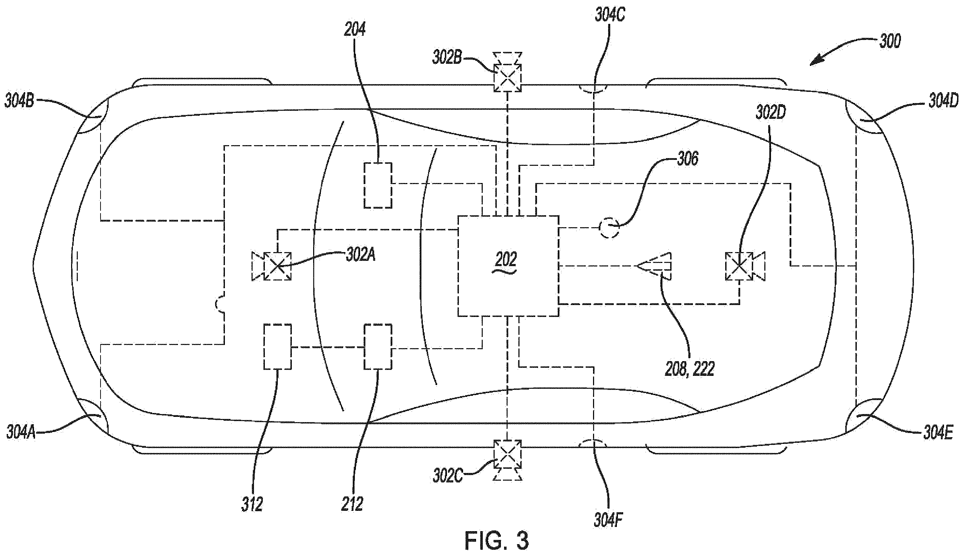

FIG. 3 shows an exemplary land based motor vehicle 300 equipped with the perception system 200 and SDL controller 212 of FIG. 2. For illustrative purposes, a passenger type motor vehicle is shown; however, the vehicle may be that of a truck, sport utility vehicle, van, motor home, or any other type of land based vehicle. It should be appreciated that the motor vehicle may also be that of a water based vehicle such as a motor boat or an air base vehicle such as an airplane without departing from the scope of the present disclosure.

The motor vehicle 300 includes a plurality of cameras 302 configured to capture images of the areas surrounding the motor vehicle 300. The exemplary motor vehicle 300 includes a front camera 302A, a right-side camera 302B, a left-side camera 302C, and a rear camera 302D. Each of the aforementioned cameras 302A-302D is configured to capture visual information in the visible light spectrum and/or in a non-visual (e.g. infrared) portion of the light spectrum in the field of view, or visual area of coverage, of the respective camera.

The motor vehicle 300 also includes a plurality of ranging sensors 304 distributed about the periphery of the motor vehicle and are configured to detect objects in the immediate vicinity adjacent the motor vehicle. FIG. 3 shows ranging sensors 304A-304F mounted on the periphery of the motor vehicle 300. Each of the ranging sensors 304A-304F may include any ranging technology, including radar, LiDAR, sonar, etc., capable of detecting a distance and direction between an object, such as a pedestrian, and the motor vehicle. The motor vehicle 300 may also include a scanning laser 306 mounted on top of the vehicle configured to scan the volume of space about the vehicle to detect the presence, direction, and distance of objects with that volume of space.

Each of the different types of external sensors 302, 304, 306 have their own unique sensing characteristics and effective ranges. The sensors 302, 304, 306 are placed at selected locations on the vehicle and collaborate to collect information on areas surrounding the motor vehicle. The sensor information on areas surrounding the motor vehicle may be obtained by a single sensor, such the scanning laser, capable of scanning a volume of space about the motor vehicle or obtained by a combination of a plurality of sensors. The raw data from the sensors 302, 304, 306 are communicated to a pre-processor or directly to the perception controller 202 for processing. The perception controller 202 is in communication with the vehicle SDL controller 212, which is in communications with a various vehicle control systems.

The motor vehicle 300 may include a V2X receiver 208 and V2X transmitter 222. The V2X receiver 208 and V2X transmitter 222 may include a circuit configured to use Wi-Fi and/or Dedicated Short Range Communications (DSRC) protocol for communication other vehicles equipped with V2V communications and to roadside units equipped with V2I communications to receive information such as lane closures, construction-related lane shifts, debris in the roadway, and stalled vehicle. The V2X receiver 208 and transmitters 222 enable the motor vehicle 300 to subscribe to other PSGs generated by other similar equipped vehicles and/or roadside units. The V2X receiver 208 and transmitters 222 also enable the motor vehicle 300 to publish the PSG 112 generated by the perception controller 202. Similarly equipped vehicles within range of the V2X transmitter 222 may subscribe to the published PSG 112. A PSG 112 covering an area greater than the effective ranges of the sensors 302, 304, 306 may be generated by fusing the information from multiple PSGs received from other similar equipped vehicles and/or roadside units capable of generating their own PSGs or transmitting of raw data for the perception controller 202 to process.

The motor vehicle includes a vehicle locator 204, such as a GPS receiver, configured to receive a plurality of GPS signals from GPS satellites to determine the longitude and latitude of the motor vehicle as well as the speed of the motor vehicle and the direction of travel of the motor vehicle. The location, speed, and direction of travel of the motor vehicle may be displayed on a preloaded electronic map and fused with the PSG 112.

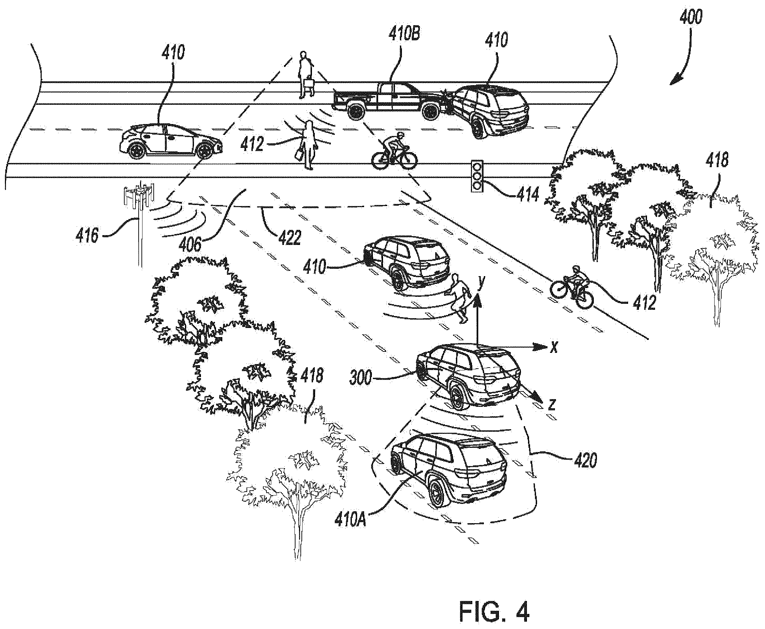

Shown in FIG. 4 is an exemplary illustration 400 of a rendering, also known as image synthesis, of an image of a virtual scene from the information contained in the PSG 112. The illustration 400 is a virtual three-dimensional (3-D) model of the real-world environment surrounding a host motor vehicle 300 including roads 404, intersections 406, and connections between these features. The illustration 400 presents a 3-D view of the objects and surfaces organized about the host motor vehicle 300. The scene also includes manmade objects such as adjacent vehicles 410, pedestrians 412, road signs 414, roadside unit infrastructure 416 such as communication towers 416, and natural objects such as trees 418 and roadside shrubbery 418 arranged in a spatial layout in the x, y, and z directions with respect to the host motor vehicle 300. The rendered objects may include additional details such as texture, lighting, shading, and color. The illustration 400 of the virtual scene is continuously updated in real time as new information is published to the PSG 112 as the host motor vehicle 300 travels down the roadway.

The virtual scene may contain detailed characteristics of the detected objects. For example, the detailed characteristics may include whether an adjacent vehicle 410 is facing toward or away from the host motor vehicle 300, the make and model of the adjacent vehicle 410, and the license plate number of the adjacent vehicle 410. The information to determine these detailed characteristics are collected and processed during the normal operation of the motor vehicle 300. The information is processed by a scene detection schema to determine the detailed characteristics.

The virtual 3-D model of the real-world environment surroundings contain detailed information beyond what can be gathered by the limited ranges of the motor vehicle external sensors 206. The information provided by the motor vehicle external sensors 206 is augmented by additional information supplied to the host motor vehicle 300 by similarly equipped adjacent vehicles 410 and infrastructure roadside units 416 via V2X communications.

The vehicle 300 is illustrated with an exemplary focus region 420 defined adjacent to the left-rear quarter of the vehicle 300. The vehicle SDL 114 executes routines contained in software applications that may require greater fidelity or information relating to regions of interest, or focus regions 144, in the PSG 112. The software routines may be activated by, but not limited to, inputs by the human driver such as activating a turn signal. In this example, the software routine would focus in on the region of interest as the area adjacent the left-rear quarter of the vehicle for the detection of objects, such as adjacent vehicle 410A, in the vehicle's blind spot. This would be similar to the action taken by a human driver of turning his/her head to see if a vehicle is present before the human driver performs a lane change. It should be appreciated that the focus regions do not necessary have to be adjacent to the vehicle. The focus regions may be remote from the vehicle 300, in which the focus regions are generated from information collected from the V2X receivers from remote vehicles 410 and/or roadside units 416.

A focus region is defined in the virtual 3-D world of the PSG 112 by the vehicle software applications. The focus region may correspond to a portion of the real-world area adjacent the motor vehicle. The priority manager identifies the external sensors having an effective sensor range that covers the corresponding portion of real-world area and increases processing power to the identified externals sensors to obtain greater fidelity and confidence of information about that corresponding portion of real-world area. The information collected from overlapping or partially overlapping sensors are fused to generate a high fidelity 3-D model of the focus region in the PSG. To account for the increase in processing power, the processing power to the external sensors not contributing to the focus region is decreased. As indicated above, a focus region 422 may also be remote from the vehicle 300. For example, FIG. 4 shows a remote focus region 422 covering an upcoming intersection 406. In this example, the remote focus region 422 is generated from information collected from a roadside unit 416 and from a remote vehicle 410B adjacent the intersection 406.

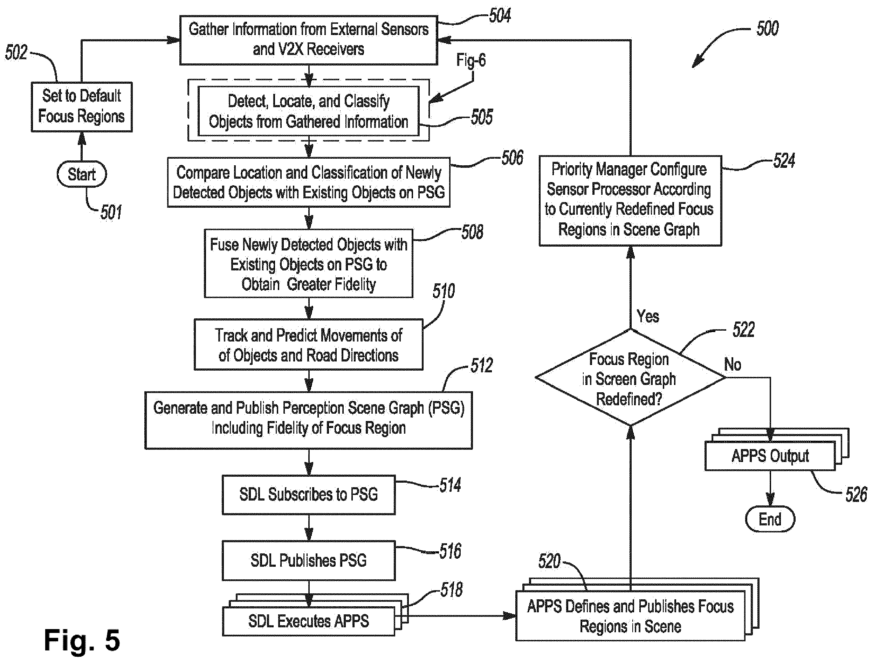

FIG. 5 shows a flowchart of a method 500 for generating a PSG 112 having objects classified by using a scene detection schema (SDS) for a motor vehicle, in accordance with an embodiment. The method starts in step 501. In step 502, upon start-up of the motor vehicle or when the motor vehicle is shifted out of park, the perception controller 202 is initialized with default focus regions, such as the area directly in front and/or rear of the motor vehicle. In step 504, the external sensors 206 gather information on the surroundings of the motor vehicle and communicate the information to the perception controller 202. Additional information regarding the surroundings of the motor vehicle 300, including information that is outside the range of the external sensors 206, are communicated to the perception controller 202 by the V2X receivers 208.

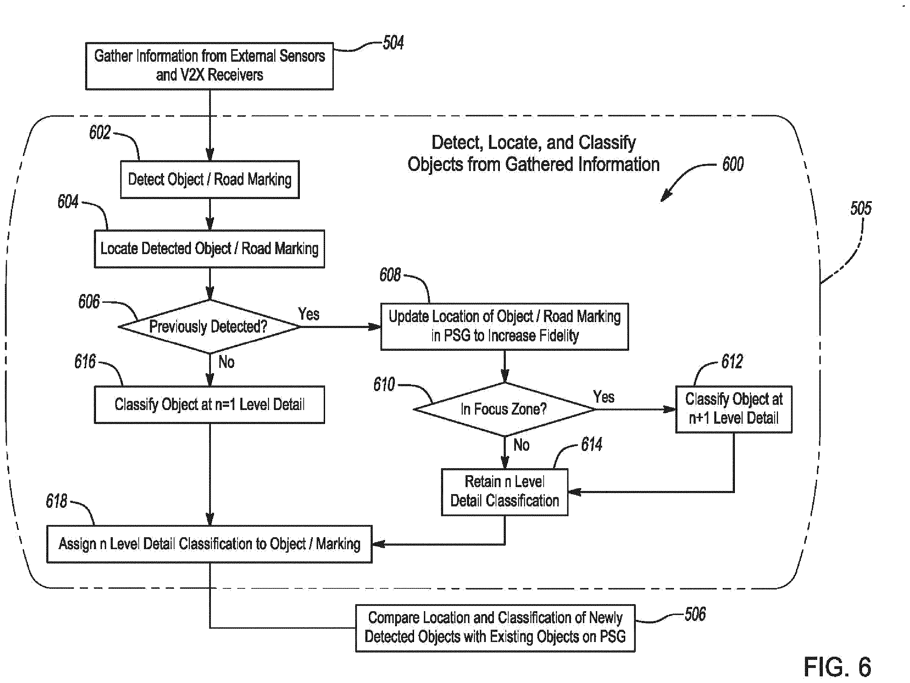

In step 505, the information gathered by the external sensors 206 are processed to detect and isolate objects from the background scene. Once the objects are detected and isolated, the range and direction of the objects relative to the motor vehicle 300 are determined to locate the objects with respect to the motor vehicle in the PSG 112. The objects are compared with reference objects stored in the reference database 232 to classify the objects using the SDS based on the priority of importance of the objects. The details of step 505 are shown in FIG. 6 and are described below starting with step 602.

In step 506, information gathered by the plurality of external sensors 206 and information received by the V2X receivers 208 may be fused to increase the confidence factors of the objects detected together with the range and direction of the objects relative to the motor vehicle 300. The newly detected objects are compared with existing objects in the PSG 112 that were previously detected.

In step 508, if the newly detected objects and previously detected objects are determined to be the same, then the newly detected objects are fused with the previously detected objects to obtain greater fidelity, also known as high fidelity, of the object. Greater fidelity includes increased details on an object's classification and location with respect to the motor vehicle 300.

In step 510, once the newly detected objects and previously detected objects are fused, the movements of the objects are tracked and predicted based on historic locations and trends in movement of the objects.

In step 512, the PSG 112 is generated, published, and becomes accessible by various vehicle systems that require information about the surroundings of the motor vehicle. The PSG 112 contains information on a set of localized objects, categories of each object, and relationship between each object and the motor vehicle 300. The PSG 112 is continuously updated and historical events of the PSG 112 may be recorded.

In step 514, a SDL controller 212 subscribes to the published PSG 112. In step 516, the SDL controller 212 publishes a real-time copy of the PSG 112 that may be subscribed to by various other vehicle systems. The various vehicle systems may utilize the published PSG 112 stored in the SDL controller 212 to operate in a temporary "limp-home" mode if the external sensors 206 or perception controller 202 malfunctions.

In step 518, the SDL controller 212 extracts the information stored in the PSG 112 as input to execute software applications 238 for the operation of the various motor vehicle systems. In step 520, the software applications 238 may redefine and publish the redefined focus regions in the PSG 112.

In step 522, if the software applications' redefined focus regions are different from the previously defined focus regions, such as the default focus regions, then in step 524, the priority manager reconfigures sensor preprocessing according to the currently redefined focus regions in the PSG 112 and the process starts again from step 504. If the software applications redefined focus regions are the same as the previously defined focus regions (i.e. not redefined) then the output of the software applications 238 are transmitted to the various vehicle systems.

The various software applications that may utilize the information stored in the PSG 112 extracted by the SDL controller 212 may include, but not limited to, APPS for communicating by V2X to other vehicles or roadside units, rendering a 3-D PSG on a HMI, controlling the vehicle drive systems, activating systems, and blind spot monitoring.

FIG. 6 shows a flow diagram 600 detailing step 505 of the flow diagram 500 shown in FIG. 5. In step 505, the information gathered by the external sensors are processed to detect, locate, and classify objects surrounding the motor vehicle 300. Each object is compared with reference objects stored in the reference database to classify the object using a SDS tree based on a priority level assigned to the object, which is based on the importance of the object.

In step 602 of FIG. 6, the information gathered by the external sensors from step 504 are processed to detect and isolate objects, including road markings, from the background scene. In step 604, the objects are located by determining the distance and direction of the objects from the vehicle 300. The objects may be assigned a predetermined importance level, also referred to as a priority level. As an example, a pedestrian may be assigned a higher importance level than a mail-box, and an animate object may be assigned a higher importance level than an inanimate object.

In step 606, the currently detected objects and locations of the currently detected objects are compared with the previously detected objects and locations of previously detected objects in the PSG 112. A determination is made as to whether the currently detected objects and the previously detected objects are the same objects.

From step 606, if a currently detected object is determined to be the same as a previously detected object, then in step 608, the currently detected object is fused with the previous detected object in the PSG 112 to increase the fidelity of the details of the object. The location of the fused object is updated to increase the accuracy of the location of the object.

In step 610, a determination is made as to whether the object from step 608 is in a currently defined focus zone. If the location of the object is determined to be in the focus zone, also known as a focus region, then in step 612, the object is assigned a classification level of n+1. In which "n" is the previously assigned classification level of the object. If the location of the object is not determined to be in the focus zone, then in step 614, the previous assigned classification level n of the object is retained.

From step 606, if a currently detected object is not determined to be the same as a previously detected object (i.e. a newly detected object), then in step 616, the newly detected object is assigned a priority level of n = 1.

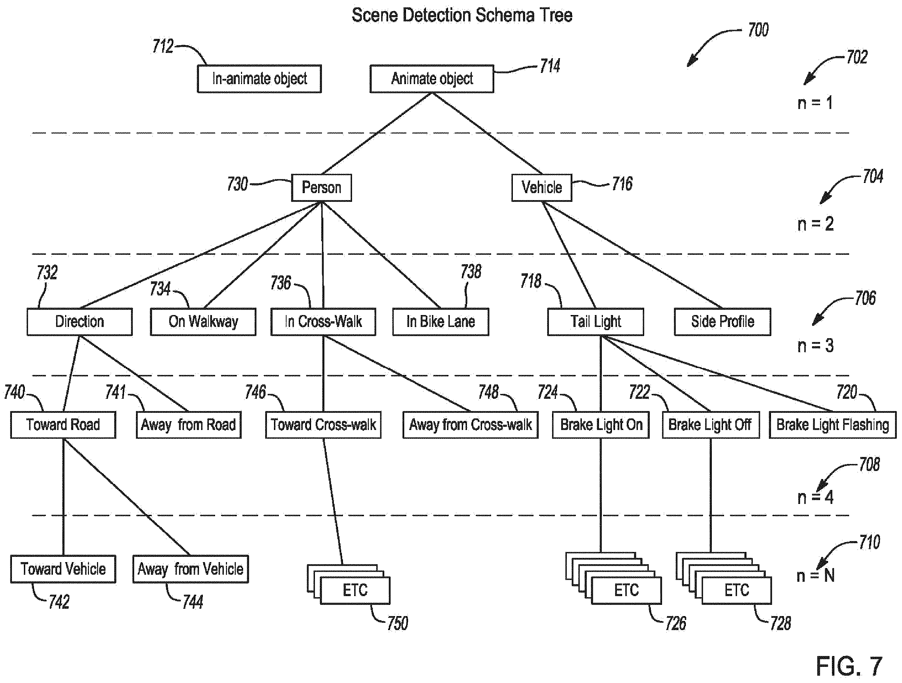

From steps 612, 614, or 616, the object is assigned a detailed classification based on the new (n+1) or retained (n) classification level from a SDS tree. FIG. 7 shows an exemplary SDS tree 700 having a plurality of classification levels from a base level n=1 to a predetermined level where n = N. As the classification levels progress from a lower number toward N, the details in the classification of the object increase in fidelity.

The exemplary SDS tree 700 is shown with classifications levels n=1, n =2, n=3, n=4 through n=N (indicated with reference numbers 702, 704, 706, 708, and 710 respectively). Objects having higher predetermined importance will obtain a higher classification level each time flow diagram 600 is reiterated. The higher the classification level, the greater the possible branches of classifications resulting in greater detail of the definition of the object. The SDS tree 700 is provided as an example only, SDS trees for actual application are determined based on the specific vehicle type, vehicle characteristics, operating environment, etc.

Referring to FIG. 7, in the example of the SDS tree 700, an inanimate object 712 has a lower predetermined importance (lower priority) than an animate object 714. The classification level of the inanimate object 712 does not progress beyond classification level n=1 702 throughout the repeated iterations of the flow diagram 600 of FIG. 6. For the higher predetermined importance (higher priority) animate object 714, it is classified as a vehicle 716 in classification level n=2 704 in the second iteration through the flow diagram 600 and hence second iteration down the SDS tree 700. The vehicle is classified as having a tail light 718 in the third iteration. In the fourth iteration, the tail light 718 might be classified as a brake light flashing 720, brake light off 722, or brake light on 724. The reiteration of SDS tree 700 is repeated until it reaches the end of the branches 726, 728 in classification level n=N 710 for the animated object 714.

In another example, a person 730 walking in the direction 732 toward a road 740 in the direction of the host vehicle 742 may have a higher importance than a person 730 walking in a cross-walk 736 in accordance with a crossing light or riding a bike within a bike lane 738. A person 730 walking on a walkway 734 toward a cross-walk may have a higher importance than that person 730 walking on a walkway 734 away from the cross-walk 748. Objects having higher importance are reclassified in higher frequency than objects having lower importance.

Objects in a focus region are deemed to have a higher importance, and therefore a higher priority level, than objects outside a focus region. Therefore, objects in a focus region are assigned a classification level of n+1 through each iteration through the flowchart 600. With each iteration of the flowchart 600, the greater the fidelity of detail is obtained from the SDS tree 700 for the objects in the focus regions.

The disclosure has described certain preferred embodiments and modifications thereto. Further modifications and alterations may occur to others upon reading and understanding the specification. Therefore, it is intended that the disclosure not be limited to the particular embodiment(s) disclosed as the best mode contemplated for carrying out this disclosure, but that the disclosure will include all embodiments falling within the scope of the appended claims.

## Claims

1. A method of classifying objects for a perception scene graph (112), comprising the steps of:
- collecting sensor information about an area adjacent a motor vehicle;
- processing the sensor information to detect a plurality of objects and to generate a perception scene graph (PSG) (112) comprising a virtual 3-dimensional model of the area adjacent the motor vehicle;
- comparing each of the detected plurality of objects with reference objects; and
- classifying each of the detected plurality of objects.

2. The method of classifying objects for a perception scene graph (112) of claim 1, wherein the PSG (112) includes the detected plurality of objects, the step of comparing each of the detected plurality of objects with reference objects is in a scene detection schema (SDS) tree (700) having a plurality of classification levels and the step of classifying each of the detected plurality of objects is in the PSG (112) based on the classification level in the SDS tree (700), further comprising the step of assigning a classification level (n) to each of the detected plurality of objects.

3. The method of classifying objects for a perception scene graph (112) of claim 2, wherein:
- the step of collecting sensor information about an area adjacent a motor vehicle, includes capturing an image by an image capturing device,
- the step of processing the sensor information to detect a plurality of objects, includes analyzing the captured image to detect the plurality of objects, and
- the step of comparing each of the detected plurality of objects with reference objects, includes comparing the captured image with reference images of the objects.

4. The method of classifying objects for a perception scene graph (112) of claim 3, further comprising the step of assigning a priority level to each of the detected plurality of objects based on a predetermined importance of each of the plurality of objects.

5. The method of classifying objects for a perception scene graph (112) of claim 4, further comprising the step of increasing the fidelity of the PSG (112) by classifying each of the detected objects based on the respective assigned priority levels and classification levels (n) for each object.

6. The method of classifying objects for a perception scene graph (112) of claim 5, further comprising the steps of:
- determining the number of instances (n) each of the plurality of objects have been previously classified;
- assigning a classification level of n+1 for each of the plurality of objects based on the number instances (n) each of the plurality of objects have been previously classified; and
- comparing each of the plurality of objects with reference objects within the respective n+1 classification level of each object in the SDS tree (700).

7. The method of classifying objects for a perception scene graph (112) of claim 6, wherein the priority level of an object classified as an animate object (714) is higher than the priority level of an object classified as an inanimate object (712) and preferably wherein the priority level of an animate object (714) of a pedestrian is higher than an animate object (714) of a motor vehicle.

8. The method of classifying objects for a perception scene graph (112) of any one of the claims 5 to 7, further comprising the steps of:
- identifying a focus region in the virtual 3-D model of the area adjacent the motor vehicle; and
- assigning a higher priority level to a plurality of objects detected in the focus region as compared to objects detected outside the focus region.

9. The method of classifying objects for a perception scene graph (112) of claim 1, wherein the step of
- collecting sensor information about an area adjacent a motor vehicle includes capturing an image, by an image capturing device, wherein each of the detected plurality of objects are compared with reference objects and wherein classifying each of the detected plurality of objects is based on matching reference objects, further comprising the steps of:
- detecting a plurality of objects in the virtual 3-dimensional model by analyzing the collected sensor information, including analyzing the captured image to detect the plurality of objects;
- assigning a priority level to each of the classified objects; and
- reclassifying selected objects using a SDS tree (700) based on the respective assigned priority levels for each object.

10. The method of classifying objects for a perception scene graph (112) of claim 9, wherein the SDS tree (700) includes a plurality of classification levels, and the method further comprising the steps of:
- obtaining a higher classification level in the SDS tree (700) for objects having a higher priority level than an object with a lower priority level; and preferably
- increasing the fidelity of the PSG (112) by reclassifying the objects by repeated iterations through the SDS tree (700).

11. The method of classifying objects for a perception scene graph (112) of claim 10, further comprising the steps of assigning an object with a higher priority level if the object is in the path of the vehicle than an object that is not within the path of the vehicle.

12. The method of classifying objects for a perception scene graph (112) of claim 11, further comprising the steps of assigning an object with a higher priority level if the object is in a defined focus region than an object that is not within a defined focus region, wherein objects having a higher priority level preferably corresponds with a higher classification level, and wherein the higher classification level preferably includes greater details of the object.

13. A system for using a scene detection schema for classifying objects in a perception scene graph (PSG) (112) in a motor vehicle, comprising:
- at least one external sensor, including an image capturing device, having an effective sensor range configured to gather information on a surrounding of the motor vehicle; and
- at least one perception controller (202) in communication with the at least one external sensor, wherein the at least one perception controller (202) is configured to generate the PSG (112) comprising a virtual model of the surroundings of the motor vehicle based on the gathered information from the external sensor;
wherein the at least one perception controller (202) is further configured to detect objects based on gathered information, compare detected objects with reference objects, and classify detected object based on matching reference objects in a scene detection schema (SDS) tree (700) having a plurality of classification levels.

14. The system for using a scene detection schema for classifying objects in a perception scene graph (PSG) (112) in a motor vehicle of claim 13, wherein the at least one perception controller (202) is further configured to increase the fidelity of the virtual model by assigning a priority level to each of the detected objects based on a predetermined importance of each object and preferably to reclassify higher priority objects with a greater frequency than lower priority objects.

15. The system for using a scene detection schema for classifying objects in a perception scene graph (PSG) (112) in a motor vehicle of claim 14, wherein the at least one perception controller (202) is configured to determine the number of instances (n) each of the objects have been previously classified from information extracted from the PSG and to assign a level of classification of n+1 for each of the plurality of objects based on the number instances (n) each of the plurality of objects have been previously classified and wherein the at least one perception controller (202) is more preferably further configured to compare each of the plurality of objects with a respective n+1 level reference objects for classification of each of the plurality of objects.
